# EUROPÄISCHE PATENTANMELDUNG

(11) **EP 3 168 125 A1**
(43) Veröffentlichungstag der Anmeldung: **17.05.2017**
(21) Anmeldenummer: 16191299.3
(22) Anmeldetag: 29.09.2016
(51) Int. Cl.: B62M 6/55

(54) **MOTORGETRIEBE, ANTRIEB UND MIT MOTORKRAFT ANTREIBBARES FAHRZEUG**

(30) Priorität: 10.11.2015 DE 102015222070
(71) Anmelder: ROBERT BOSCH GMBH, 70442 Stuttgart (DE)
(72) Erfinder: Hinterkausen, Markus, 71696 Moeglingen (DE); Kimmich, Peter, 71144 Steinenbronn (DE); Hilzinger, Juergen, 71272 Renningen (DE)

(57) **Zusammenfassung**

Die vorliegende Erfindung betrifft ein Motorgetriebe (30) eines Antriebes (80) eines mit Motorkraft antreibbaren Fahrzeuges (1), insbesondere eines zusätzlich mit Muskelkraft antreibbaren Fahrzeuges (1), eines Elektrofahrrades, eBikes, Pedelecs oder dergleichen, welches als - insbesondere einstufiges - Evoloidgetriebe ausgebildet ist.

## Beschreibung

### Stand der Technik

Die vorliegende Erfindung betrifft ein Motorgetriebe, einen Antrieb sowie ein Fahrzeug. Die vorliegende Erfindung betrifft insbesondere ein Motorgetriebe eines Antriebes eines mit Motorkraft antreibbaren Fahrzeuges, insbesondere eines zusätzlich mit Muskelkraft antreibbaren Fahrzeuges, eines Elektrofahrrades, e-Bikes, Pedelecs oder dergleichen, einen Antrieb eines mit Motorkraft antreibbaren Fahrzeuges, insbesondere eines zusätzlich mit Muskelkraft antreibbaren Fahrzeuges, eines Elektrofahrrades, e-Bikes, Pedelecs oder dergleichen sowie ein mit Motorkraft antreibbares Fahrzeug, insbesondere ein zusätzlich mit Muskelkraft antreibbares Fahrzeug, ein Elektrofahrrad, e-Bike, Pedelec oder dergleichen.

Bei mit Motorkraft antreibbaren Fahrzeugen und insbesondere bei Fahrzeugen, die zusätzlich auch mit Muskelkraft antreibbar sind, zum Beispiel bei Elektrofahrrädern, e-Bikes, Pedelecs oder dergleichen wird zwischen dem antreibenden Elektromotor und dem Abtrieb ein Zwischengetriebe vorgesehen, weil die Drehzahl des antreibenden Motors in der Regel erheblich höher ist als die Drehzahl des Abtriebsrades. Mithilfe des zwischengeschalteten Motorgetriebes wird also eine Drehzahlanpassung vorgenommen. Dabei werden als zwischengeschaltetes Motorgetriebe häufig Stirnradstufen, Planetenradstufen oder auch Riemenantriebe eingesetzt.

Auf Grund der hohen Drehzahldiskrepanz zwischen Motor und Abtriebsrad und der bei bekannten Zwischengetrieben nur begrenzt durchführbaren Drehzahlanpassung, die begründet ist in Bauraum- und Festigkeitsanforderungen, werden oft mehrere hintereinander geschaltete Getriebestufen eingesetzt. Dies führt zu einem erhöhten Produktions-, Montage- und Wartungsaufwand, zu einem Absinken des Wirkungsgrades des Antriebes, einem Ansteigen des Geräuschpegels und einer Zunahme an Bauraum und Gewicht.

### Offenbarung der Erfindung

Das erfindungsgemäße Motorgetriebe mit den Merkmalen des unabhängigen Anspruches 1 weist demgegenüber den Vorteil auf, dass die Notwendigkeit einer Mehrzahl von Getriebestufen entfällt und somit bei gesteigertem Wirkungsgrad und reduzierter Komplexität des Zwischengetriebes, der Aufwand bei Montage und Wartung sowie die Kosten, der Bauraum und das Gewicht bei abgesenktem Geräuschpegel reduziert werden können. Dies wird erfindungsgemäß mit den Merkmalen des unabhängigen Anspruches 1 dadurch erreicht, dass ein Motorgetriebe eines Antriebes eines mit Motorkraft antreibbaren Fahrzeuges und insbesondere eines zusätzlich mit Muskelkraft antreibbaren Fahrzeuges, eines Elektrofahrrades, eBikes, Pedelecs oder dergleichen geschaffen wird, welches als - insbesondere einstufiges - Evoloidgetriebe ausgebildet ist. Die Verwendung eines Evoloidgetriebes ermöglicht ein vergleichsweises hohes Untersetzungsverhältnis zwischen Eingangsdrehzahl durch den antreibenden Motor und der an das Antriebsrad übertragbaren Ausgangsdrehzahl. Daher entfällt die Notwendigkeit eines Anpassens der Drehzahl in mehreren Schritten und somit die Notwendigkeit des Vorsehens mehrerer hintereinander geschalteter Getriebestufen.

Die Unteransprüche zeigen bevorzugte Weiterbildungen der Erfindung.

Eine bevorzugte Ausführungsform des erfindungsgemäßen Motorgetriebes ist mit einem Evoloidritzel und mit einem Evoloidzahnrad ausgebildet. Das Evoloidritzel dient als Antriebs- oder Getriebeeingangselement des Motorgetriebes und ist zur Kopplung mit einer Motorantriebswelle eines Motors des Antriebes des Fahrzeuges ausgebildet. Das Evoloidzahnrad fungiert als Abtriebs- oder Getriebeausgangselement des Motorgetriebes und ist zur Kopplung mit einem Abtriebselement des Antriebes des Fahrzeuges ausgebildet.

Das Evoloidritzel und das Evoloidzahnrad sind miteinander gekoppelt, insbesondere über einen unmittelbaren und kämmenden Eingriff miteinander, das heißt ohne Vorsehen eines Zwischengetriebes. Dies ermöglicht eine weitere Steigerung des Wirkungsgrades des erfindungsgemäßen Motorgetriebes.

Bei einer anderen Ausführungsform des Motorgetriebes sind dessen einzelne Komponenten so ausgebildet, dass eine Untersetzung im Bereich von etwa 14 : 1 vorliegt. Dadurch wird die Notwendigkeit des Vorsehens einer Mehrzahl hintereinander geschalteter Getriebestufen vermieden. Das bedeutet, dass mit einer einzelnen Getriebestufe des Motorgetriebes in Form eines Evoloidgetriebes eine hohe Untersetzung zur Anpassung der Motordrehzahl an die Drehzahl des Antriebsrades erfolgen kann.

Bei einer besonders bevorzugten Ausführungsform des erfindungsgemäßen Motorgetriebes weist das Evoloidritzel eine Zähnezahl z1 von weniger als 7 auf.

Vorzugsweise weist das Evoloidritzel eine Zähnezahl z1 mit einem Wert von 4, 5 oder 6 auf.

Ferner ist es von Vorteil, wenn das Evoloidzahnrad als Ausgangsgetriebeelement eine Zähnezahl z2 im Bereich von 70 aufweist.

Besonders stabile Betriebsverhältnisse stellen sich ein, wenn das Evoloidritzel mit oder aus einem Metall gefertigt ist. Auf diese Weise kann den hohen Beanspruchungen beim Übertrag des Drehmomentes auf das Evoloidzahnrad Rechnung getragen werden.

Ein besonders direkter und daher reibungsarmer Antrieb ergibt sich dann, wenn das Evoloidritzel direkt mit einer Motorwelle des antreibenden Motors verbindbar oder verbunden ist.

Auf Grund der höheren Zähnezahl und der größeren Ausdehnung kann das Evoloidzahnrad mit oder aus einem Kunststoff gefertigt sein, wodurch sich eine höhere Gewichtseinsparung und eine Kostensenkung des erfindungsgemäßen Motorgetriebes insgesamt ergibt.

Ferner betrifft die vorliegende Erfindung gemäß einem anderen Aspekt einen Antrieb eines mit Motorkraft antreibbaren Fahrzeuges und insbesondere eines zusätzlich mit Muskelkraft antreibbaren Fahrzeuges, eines Elektrofahrrades, e-Bikes, Pedelecs oder dergleichen. Dieser Antrieb ist mit einem Motor, einem Kurbeltrieb mit einer Kurbelwelle, ggf. insbesondere mit einem Kurbelgetriebe, einem Abtriebsgetriebe mit einem Abtriebselement und einem Motorgetriebe gemäß der vorliegenden Erfindung ausgebildet. Durch einen derartigen Aufbau lässt sich in besonders platzsparender und betriebssicherer Art und Weise ein kombinierter Drehmomenteintrag aus dem Antriebsmotor und einer anderen Drehmomentquelle, zum Beispiel der Muskelkraft eines Benutzers, mit hohem Wirkungsgrad erzielen.

Bei einer besonders bevorzugten Ausbildungsform des erfindungsgemäßen Antriebes ist das Motorgetriebe eingangsseitig mit dem Motor und ausgangsseitig mit dem Abtriebsgetriebe koppelbar oder gekoppelt.

Insbesondere ist das gegebenenfalls vorgesehene Kurbelgetriebe eingangsseitig mit der Kurbelwelle und ausgangsseitig mit dem Abtriebsgetriebe koppelbar oder gekoppelt.

Bei einer anderen bevorzugten Ausgestaltungsform des erfindungsgemäßen Antriebes ist das Abtriebsgetriebe eingerichtet, jeweils gesteuert (i) über das Motorgetriebe ein Motordrehmoment des Motors und (ii) über das Kurbelgetriebe ein zweites Drehmoment und insbesondere ein durch Muskelkraft erzeugtes Fahrraddrehmoment aufzunehmen und an das Abtriebselement auszugeben.

Gemäß einem weiteren Aspekt der vorliegenden Erfindung wird ein mit Motorkraft antreibbares Fahrzeug geschaffen und insbesondere ein zusätzlich mit Muskelkraft antreibbares Fahrzeug, ein Elektrofahrrad, e-Bikes, Pedelec oder dergleichen. Dieses weist erfindungsgemäß ein Antriebsrad auf sowie einen Antrieb gemäß der vorliegenden Erfindung, wobei das Antriebsrad mit dem Antrieb derart gekoppelt oder koppelbar ist, dass es mit dem Antrieb antreibbar ist.

### Kurzbeschreibung der Figuren

Unter Bezugnahme auf die beigefügten Figuren werden Ausführungsformen der Erfindung im Detail beschrieben.
- Figur 1: ist eine schematische Darstellung für ein Beispiel eines Fahrzeugs nach Art eines Elektrofahrrads, bei welchem eine erste Ausführungsform der Erfindung realisiert ist.
- Figur 2: ist eine schematische Draufsicht auf einen erfindungsgemäßen Antrieb 2,3 nach Art eines Blockdiagramms
- Figuren 3, 4: zeigen Draufsichten auf Ausführungsformen des erfindungsgemäßen Antriebes.
- Figur 5: zeigt in schematischer Form eine Seitenansicht einer Ausführungsform des erfindungsgemäßen Motorgetriebes.
- Figur 6: zeigt eine andere Ausführungsform des erfindungsgemäßen Motorgetriebes.
- Figur 7: zeigt in schematischer Form eine Draufsicht auf ein Beispiel eines herkömmlichen Antriebes.

### Bevorzugte Ausführungsformen der Erfindung

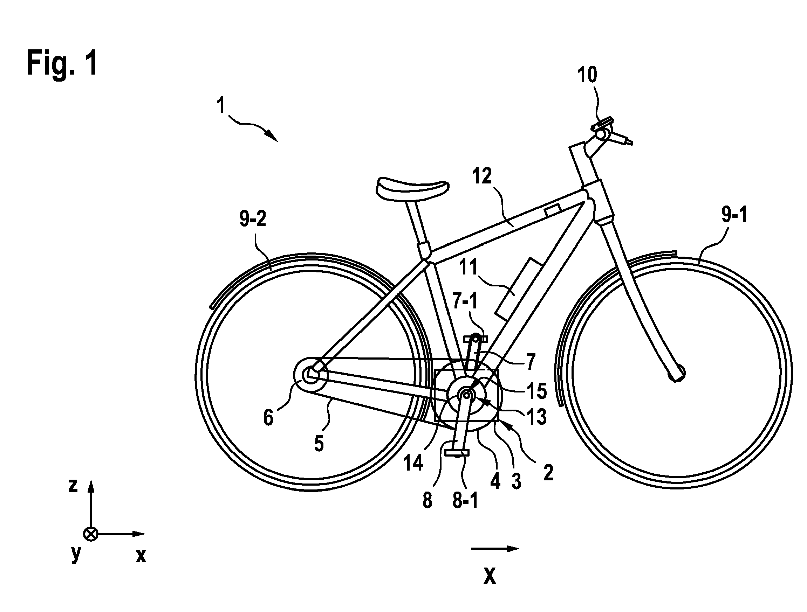

Nachfolgend werden unter Bezugnahme auf die Figuren 1 bis 6 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form von einander isoliert und beliebig miteinander kombiniert werden, ohne den Kern der Erfindung zu verlassen.

Zunächst wird unter Bezugnahme auf Figur 1 beispielhaft ein Elektrofahrrad als eine bevorzugte Ausführungsform des erfindungsgemäßen Fahrzeuges 1 im Detail beschrieben.

Das Fahrzeug 1 umfasst als Elektrofahrrad einen Rahmen 12, an dem ein Vorderrad 9-1, ein Hinterrad 9-2 und ein Kurbeltrieb 2 mit zwei Kurbeln 7, 8 mit Pedalen 7-1 und 8-1 angeordnet sind. Ein elektrischer Antrieb 3 ist in den Kurbeltrieb 2 integriert. Am Hinterrad 9-2 ist eine Gangschaltung mit Ritzel 6 angeordnet.

Ein Antriebsmoment, welches durch den Fahrer über den Kurbeltrieb und/oder durch den elektrischen Antrieb 3 bereitgestellt wird, wird von einem Kettenblatt 4 am Kurbeltrieb 2 über eine Kette 5 auf das Ritzel 6 übertragen.

Am Lenker des Fahrzeuges 1 ist ferner eine Steuereinheit 10 angeordnet, welche mit dem elektrischen Antrieb 3 verbunden ist. Im oder am Rahmen 12 ist ferner Batterie 11 ausgebildet, welche zur Stromversorgung des elektrischen Antriebes 3 dient.

Im Rahmen 12 integriert ist des Weiteren ein Kurbellager 13 oder Tretlager, welches ein Kurbelgehäuse 14 und eine Kurbelwelle 15 aufweist.

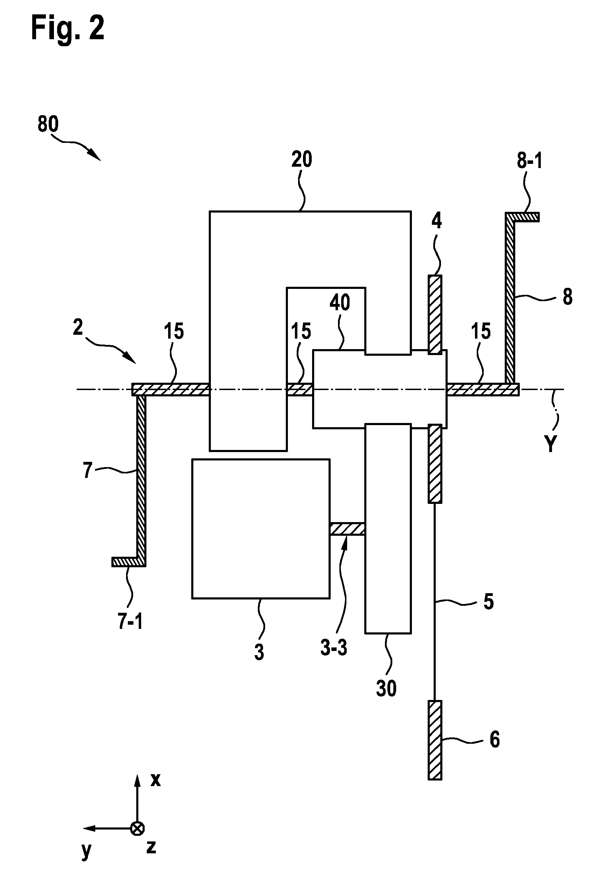

Figur 2 zeigt in schematischer Draufsicht nach Art eines Blockdiagramms eine erste Ausführungsform des erfindungsgemäßen Antriebes 80 unter Verwendung eines erfindungsgemäßen Motorgetriebes 30 in Form eines Evoloidgetriebes.

Der erfindungsgemäße Antrieb 80 besteht aus einem Kurbeltrieb 2 und einem Motorantrieb aus Motor 3, Motorwelle 3-3 und Motorgetriebe 30.

Durch die Anordnung gemäß Figur 2 soll einerseits ein Motordrehmoment aus dem Motor 3 über die Motorwelle 3-3 mittels des Motorgetriebes 30 und andererseits ein zweites Drehmoment, welches aus dem Kurbeltrieb 2 stammt und zum Beispiel durch einen Benutzer des Fahrzeuges über die Kurbeln 7, 8 und die daran befestigten Pedalen 7-1 und 8-1 mittels der Kurbelwelle 15 bereitgestellt wird, insbesondere gesteuert an das Abtriebsgetriebe 40 übertragen werden. Das Abtriebsgetriebe 40 kann auch als Ausgangsgetriebe des Antriebs 80 bezeichnet werden. Das Ausgangsdrehmoment wird dann an das Abtriebselement 4, zum Beispiel ein Kettenblatt mit Kette 5 und angebundenem Ritzel 6 übertragen.

In Figur 1 ist das Fahrrad als erfindungsgemäßes Fahrzeug 1 mit seiner Längserstreckungsrichtung X parallel zur x-Richtung ausgerichtet und in einer Ebene parallel zur xy-Ebene vertikal aufgerichtet. In Figur 2 ist entsprechend die Draufsicht von oben, das heißt auf eine Ebene parallel zur xy-Ebene, dargestellt.

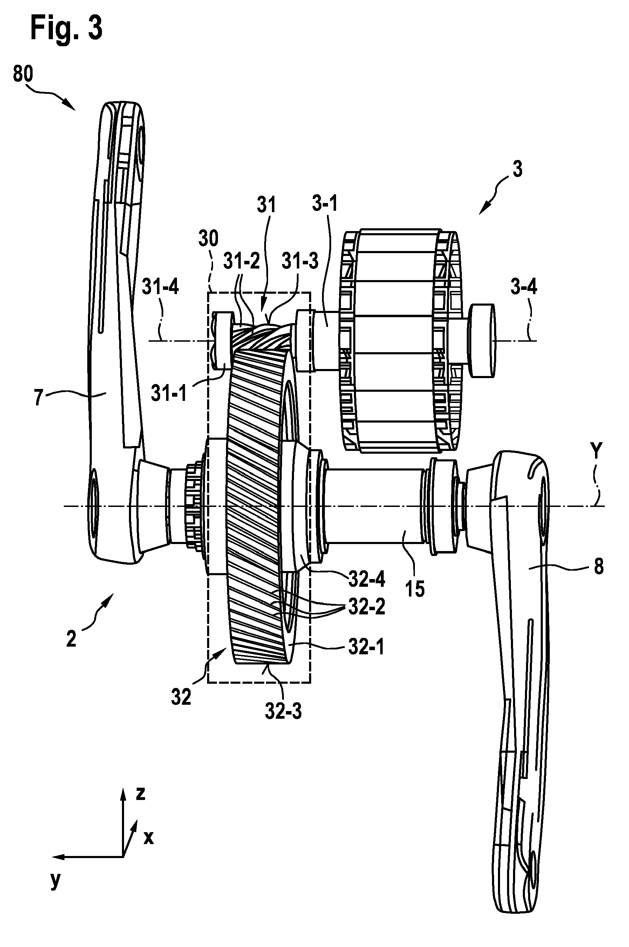

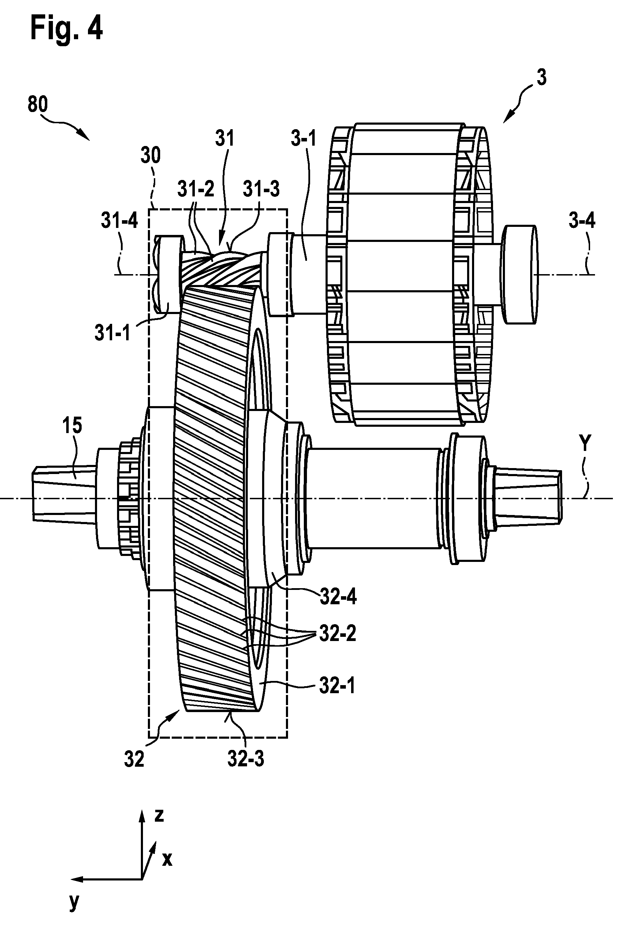

Die Figuren 3 und 4 zeigen Details des Antriebes 80 unter Fortlassung sämtlicher äußerer Gehäuse.

An der Kurbelwelle 15 sind die Kurbeln 7 und 8 angebracht, über welche mittels Muskelkraft ein Drehmoment auf die Kurbelwelle 15 übertragen werden kann.

Andererseits ist ein Motor 3 in Form eines Elektromotors vorgesehen. Dieser weist eine Motorachse 3-1 auf, an welcher das Evoloidritzel 31 des Motorgetriebes 30 angebracht ist. Das Evoloidritzel 31 stellt praktisch eine axiale Verlängerung oder ein axiales Endstück der Motorachse 3-1 dar. Das Evoloidritzel 31 besitzt eine Ritzeloberfläche 31-3, an welcher Zähne 31-2 ausgebildet sind. Der Körper 31-1 des Ritzels 31 ist mit seiner Achse 31-4 mit der Achse der Motorwelle 3-1 zusammenfallend ausgebildet.

Die Zähne 1-2 des Evoloidritzels 31 kämmen unmittelbar mit Zähnen 32-2 des Evoloidzahnrades 32 des Motorgetriebes 30. Die Zähne 32-2 des Evoloidzahnrades 32 sind an der Oberfläche 32-3 des Körpers des Evoloidzahnrades 32-1 ausgebildet. Die Zähne 31-2 und 32-2 des Evoloidritzels 31 bzw. des Evoloidzahnrades 32 sind jeweils an einer Außenumfangsfläche der jeweiligen Körper 31-1 und 32-1 des Evoloidritzels 31 bzw. des Evoloidzahnrades 32 ausgebildet.

Die Achse Y der Kurbelwelle 15 ist parallel zur y-Richtung, also parallel zur Querrichtung des Fahrzeuges 1 aus Figur 1 ausgerichtet.

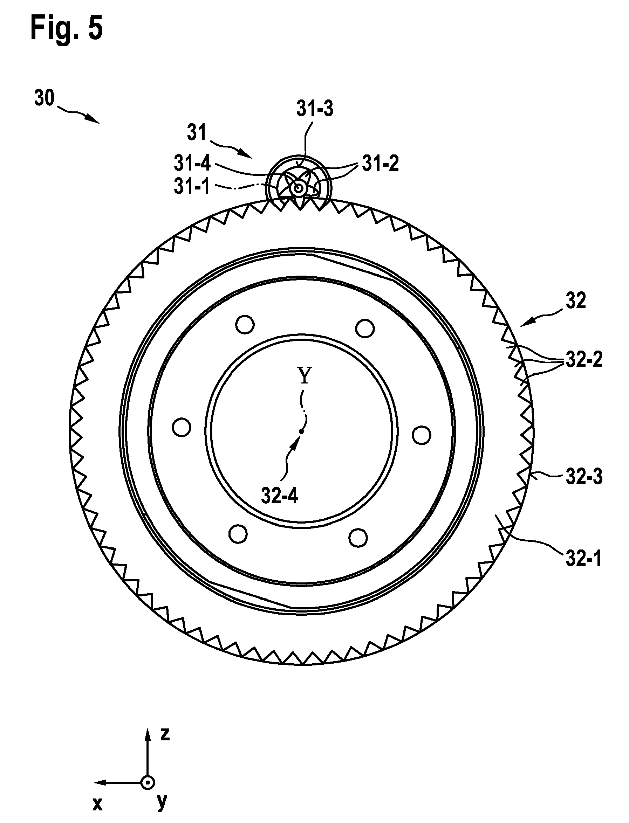

Figur 5 zeigt in schematischer Seitenansicht auf einer Ebene parallel zur xz-Ebene Details einer Ausführungsform des Motorgetriebes 30 und insbesondere die Anordnung aus Evoloidritzel 31 und Evoloidzahnrad 32. Die Achsen 31-4 und 32-4 des Evoloidritzels 31 bzw. des Evoloidzahnrades 32 sind jeweils parallel ausgerichtet zur y-Richtung. Zu erkennen ist wieder, dass das Evoloidritzel 31 auf der Außenumfangsfläche 31-3 eine Mehrzahl von Zähnen 31-2 aufweist. Diese Zähne 31-2 kämmen mit entsprechenden Zähnen 32-2 des Evoloidzahnrades 32, die an der Außenumfangsfläche 32-2 des Körpers 32-1 des Evoloidzahnrades 32 ausgebildet sind.

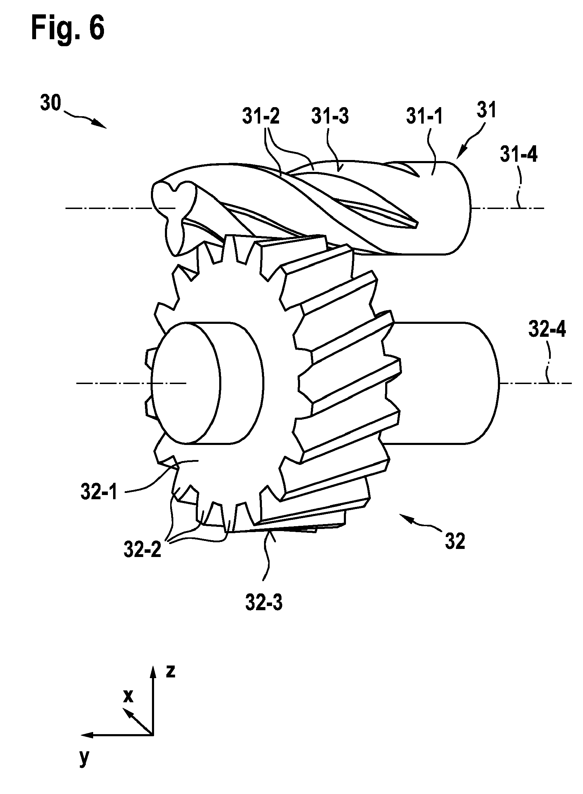

Figur 6 zeigt eine perspektivische Ansicht einer anderen Ausführungsform des erfindungsgemäßen Motorgetriebes 30 nach Art eines Evoloidgetriebes.

Bei der Ausführungsform gemäß Figur 5 besitzt das Evoloidritzel 31 eine Zähnezahl z1 = 5, wogegen bei der Ausführungsform gemäß Figur 6 nur drei Zähne an der Außenumfangsfläche 31-3 des Körpers 31-1 des Evoloidritzels 31 vorgesehen sind: z1 = 3.

Auch ist hier in der Ausführungsform der Figur 6 das Evoloidzahnrad 32 anders dimensioniert als bei der Ausführungsform gemäß Figur 5. Jedoch ist das Grundprinzip der Anordnung unverändert.

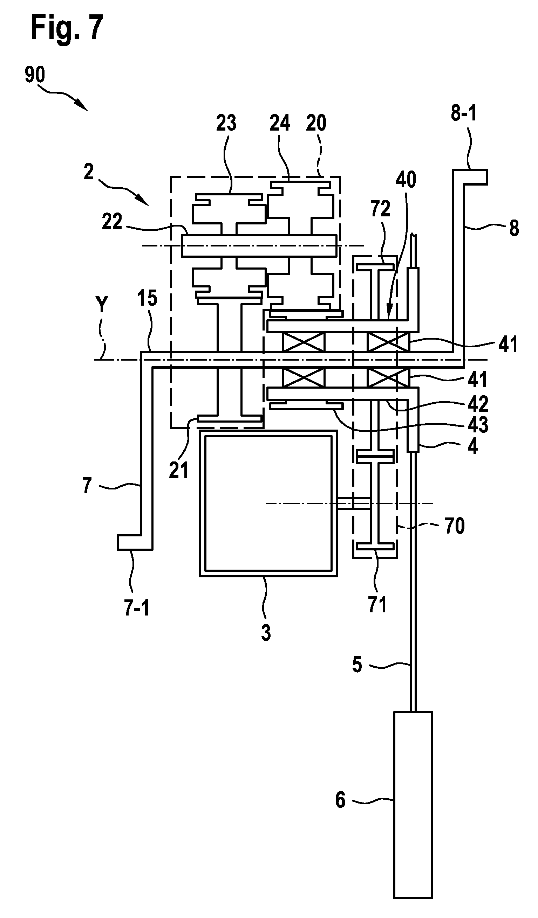

Figur 7 schließlich zeigt einen herkömmlichen Antrieb 90. Dieser ist grundsätzlich vergleichbar zum erfindungsgemäßen Aufbau, das heißt, er besteht aus einem Kurbeltrieb 2 und einem Motorantrieb aus Motor 3, Motorwelle 3-1 und einem Motorgetriebe 70, welches hier jedoch nicht erfindungsgemäß als Evoloidgetriebe, sondern in herkömmlicher Form, zum Beispiel als mehrstufiges Getriebe mit Elektroantriebsrad 71 und Abtriebssammelrad 72 ausgebildet sein kann. In dieser beispielhaften Darstellung greifen der Kurbeltrieb 2 mit seinem Kurbelgetriebe 20 - welcher eine Kurbelantriebsübersetzungswelle 22 und erste und zweite Ünersetzungsräder 23 und 24 aufweist - und der Motorantrieb 3 mit seinem Motorgetriebe 70 beide auf das Ausgangsgetriebe oder Abtriebsgetriebe 40 zur alternativen oder gleichzeitigen Drehmomentübertragung zu, wobei ein entsprechendes Drehmoment an das Abtriebselement 4, die Kette 5 und schließlich das Ritzel 6 übertragen wird.

Diese und weitere Merkmale und Eigenschaften der vorliegenden Erfindung werden an Hand der folgenden Darlegungen weiter erläutert:

Die Erfindung betrifft vorzugsweise den Antrieb eines Elektrofahrrads und insbesondere eines Pedelecs.

Solche Antriebe enthalten ein Getriebe, welches auch als Motorgetriebe 30 bezeichnet wird und welches die Aufgabe hat, ein von einem Elektromotor 3 erzeugtes Drehmoment auf das Antriebsrad 9-2 zu übertragen. Weil die Drehzahl des Elektromotors 3 in der Regel erheblich höher ist als die Drehzahl des Antriebsrads 9-2, wird mit Hilfe des Motorgetriebes 30 eine Drehzahlanpassung vorgenommen.

Häufig werden dazu Stirnrad- oder Planetenradstufen, aber auch Riemengetriebe eingesetzt. Aus Bauraum- und Festigkeitsgründen ist die pro Stufe erzielbare Übersetzung beschränkt. Daher werden mehrere hintereinandergeschaltete Stufen benötigt.

Der Einsatz mehrerer Getriebestufen ist aufwendig, teuer und bedeutet eine Zunahme von Gewicht und Bauraum. Zusätzliche Getriebestufen bringen zudem eine Verschlechterung des Wirkungsgrads und im Betrieb eine erhöhte Geräuschentwicklung mit sich.

Ferner sind in der Auslegung der Stirnradstufen Grenzen gesetzt. Aus Festigkeits- und Herstellungsgründen kann das treibende Ritzel einer Stirnradverzahnung nicht beliebig klein ausgelegt werden. Beim Zahneingriff entstehen im Zahnfuß hohe Spannungen, die zu einem Zahnfußbruch führen können.

Hohe Druckbeanspruchungen können ebenfalls zwischen den zwei Wälzkörpern entstehen, die zu einer Grübchenbildung führen können. Da die Zahnfuß- und Grübchentragfähigkeiten nicht überschritten werden dürfen, kann ein kleinster zulässiger Durchmesser dl berechnet werden.

Für übliche Bezugsprofile ist nach den DIN-Normen 3960 und 867 die kleinste Zähnezahl von z1 = 7 für das treibende Ritzel vorgesehen. Bei kleinerer Zähnezahl z1 kann ein schädlicher Unterschnitt auftreten. Dieser kann eine Beschädigung oder Zerstörung am Zahnfuß erzeugen.

Deswegen kann eine konventionelle Stirnradverzahnung für eine festgelegte Übersetzung nicht beliebig kompakt ausgelegt werden. In der Praxis liegt die Grenze für die kleinste Zähnezahl bei erhöhten Anforderungen hinsichtlich Langlebigkeit bereits bei größeren Zähnezahlen.

Erfindungsgemäß werden daher Evoloidverzahnungen vorgesehen.

Als Evoloidverzahnung werden schräge Evolventenverzahnungen bezeichnet, welche zur Realisierung großer Übersetzungen in einer Stufe mit parallelen Achsen Zähnezahlen z1 für das Evoloidritzel 31 mit bis zu z1 = 1 verwenden.

Die erfindungsgemäß eingesetzte Evoloidverzahnung ist ein Verzahnungssystem mit allen Eigenschaften üblicher Evolventen-Stirnrad-Verzahnungen, bei denen es gelungen ist, die Zähnezahl z1 des Evoloidritzels 31 bis auf den kleinstmöglichen Wert z1 = 1 zu verringern, ohne dass ein schädlicher Unterschnitt oder ein Spitzwerden der Zähne eintreten würde.

Es ist eine Aspekt der Erfindung, ein Motorgetriebe 30 insbesondere für eBike-Antriebe 2, 3 zu schaffen, welches Auslegungen ermöglicht, die kompakt und gewichts- und kostenreduziert sind und einen verbesserten Wirkungsgrad und bei gleicher Übersetzung eine geringere Geräuschentwicklung zeigen. Bei gleichem Achsabstand soll eine höhere Übersetzung möglich sein. Insbesondere soll sich eine vorteilhafte Kombination aus den beiden erstgenannten Optimierungsrichtungen ergeben.

Ein Aspekt der der Erfindung besteht darin, die konventionellen Getriebe im eBike-Antriebsstrang durch die Sonderverzahnung Evoloid zu ersetzen, welche eine Verkleinerung der Ritzelzähnezahl von z1 < 7 ermöglicht.

Dadurch kann gegenüber einem konventionellen zweistufigen eBike-Stirnradgetriebe bei gleicher Übersetzung und geringerem Bauraum eine zweite Getriebestufe eingespart werden.

Durch den Wegfall einer zweiten Getriebestufe entfallen auch die Zahneingriffsfrequenzen der zweiten Stufe und das Getriebe kann leiser ausgelegt werden.

Zudem trägt der gegenüber einer konventionellen Stirnradstufe erheblich größere Schrägungswinkel der Evoloidverzahnung zur Reduzierung der Geräuschentwicklung des Getriebes bei.

Der Einsatz einer Evoloid-Verzahnung ermöglicht somit die Realisierung kompakter und leiser eBike-Antriebe und damit kann der Kundenwunsch nach einem Elektrofahrrad, welches sich optisch, vom Gewicht und vom Geräusch her kaum von einem "normalen" Fahrrad unterscheidet, entgegengekommen werden.

Figur 3 zeigt eine eBike-Antriebseinheit mit einstufigem Evoloidgetriebe 30. Das Evoloidritzel 31 weist hier eine Zähnezahl von z1 = 5 auf und das Abtriebszahnrad hat eine Zähnezahl von z2 = 71.

Damit beträgt die Übersetzung in nur einer Stufe 14,2:1. Getriebeeingang bzw. Antrieb ist das Evoloidritzel 31 während das große Zahnrad 32 bzw. Abtrieb über einen Freilauf mit dem Kettenblatt 4 verbunden ist.

Das große Zahnrad 32 kann aus Kunststoff ausgeführt werden. Das Ritzel 31 ist aus Metall und mit der Motorwelle 3-3 verbunden.

## Patentansprüche

1. Motorgetriebe (30) eines Antriebes (80) eines mit Motorkraft antreibbaren Fahrzeuges (1), insbesondere eines zusätzlich mit Muskelkraft antreibbaren Fahrzeuges (1), eines Elektrofahrrades, eBikes, Pedelecs oder dergleichen,
welches als - insbesondere einstufiges - Evoloidgetriebe ausgebildet ist.

2. Motorgetriebe (30) nach Anspruch 1,
mit:
- einem Evoloidritzel (31) als Antriebs- oder Getriebeeingangselement des Motorgetriebes (30), welches zur Kopplung mit einer Motorantriebswelle (3-3) eines Motors (3) des Antriebes (80) des Fahrzeuges (1) ausgebildet ist, und
- einem Evoloidzahnrad (32) als Abtriebs- oder Getriebeausgangselement des Motorgetriebes (30), welches zur Kopplung mit einem Abtriebselement (4) des Antriebes (2, 3) des Fahrzeuges (1) ausgebildet ist,
wobei das Evoloidritzel (31) und das Evoloidzahnrad (32) miteinander gekoppelt sind, insbesondere über einen unmittelbaren kämmenden Eingriff miteinander.

3. Motorgetriebe (30) nach einem der vorangehenden Ansprüche, welches mit einer Untersetzung im Bereich von etwa 14:1 ausgebildet ist.

4. Motorgetriebe (30) nach einem der vorangehenden Ansprüche,
bei welchem das Evoloidritzel (31) eine Zähnezahl (z1) von weniger als 7 und insbesondere von 4, 5 oder 6 aufweist.

5. Motorgetriebe (30) nach einem der vorangehenden Ansprüche,
bei welchem das Evoloidzahnrad (32) eine Zähnezahl (z2) im Bereich von 70 aufweist.

6. Motorgetriebe (30) nach einem der vorangehenden Ansprüche,
bei welchem das Evoloidritzel (31) mit oder aus Metall gefertigt ist.

7. Motorgetriebe (30) nach einem der vorangehenden Ansprüche,
bei welchem das Evoloidritzel (31) mit einer Motorwelle (3-3) verbunden ist.

8. Motorgetriebe (30) nach einem der vorangehenden Ansprüche,
bei welchem das Evoloidzahnrad (32) mit oder aus einem Kunststoff gefertigt ist.

9. Antrieb (80) eines mit Motorkraft antreibbaren Fahrzeuges (1), insbesondere eines zusätzlich mit Muskelkraft antreibbaren Fahrzeuges (1), eines Elektrofahrrades, eBikes, Pedelecs oder dergleichen, mit:
- einem Motor (3),
- einem Kurbeltrieb (2) mit einer Kurbelwelle (15),
- einem Abtriebsgetriebe (40) mit einem Abtriebselement (4) und
- einem Motorgetriebe (30) nach einem der Ansprüche 1 bis 8.

10. Antrieb (80) nach Anspruch 9,
bei welchem das Motorgetriebe (30) eingangsseitig mit dem Motor (3) und ausgangsseitig mit dem Abtriebsgetriebe (40) koppelbar oder gekoppelt ist.

11. Antrieb (80) nach Anspruch 9 oder 10,
mit einem Kurbelgetriebe (20), welches eingangsseitig mit der Kurbelwelle (15) und ausgangsseitig mit dem Abtriebsgetriebe (40) koppelbar oder gekoppelt ist.

12. Antrieb (80) nach einem der Ansprüche 9 bis 11,
bei welchem das Abtriebsgetriebe (40) eingerichtet ist, jeweils gesteuert (i) über das Motorgetriebe (30) ein Motordrehmoment des Motors (3) und (ii) über das Kurbelgetriebe (20) ein zweites Drehmoment und insbesondere ein durch Muskelkraft erzeugtes Fahrerdrehmoment aufzunehmen und an das Abtriebselement (4) auszugeben.

13. Mit Motorkraft antreibbares Fahrzeug (1), insbesondere zusätzlich mit Muskelkraft antreibbares Fahrzeuges (1), Elektrofahrrad, eBike, Pedelec oder dergleichen,
mit:
- einem Antriebsrad (9-2) und
- einem Antrieb (80) nach einem der Ansprüche 9 bis 12,
wobei das Antriebsrad (9-2) mit dem Antrieb (80) derart gekoppelt oder koppelbar ist, dass es mit dem Antrieb (80) antreibbar ist.
